# EUROPÄISCHE PATENTSCHRIFT

(11) **EP 1 217 247 B1**
(45) Veröffentlichungstag und Bekanntmachung des Hinweises auf die Patenterteilung: **03.10.2007**
(21) Anmeldenummer: 01129335.4
(22) Anmeldetag: 17.12.2001
(51) Int. Cl.: F16D 65/092

(54) **Bremsbelag für eine Teilbelagscheibenbremse**
Brake pad for a partially lined disc brake
Patin de frein pour frein à disque à garnitures partielles

(30) Priorität: 22.12.2000 DE 10064168
(43) Veröffentlichungstag der Anmeldung: 26.06.2002
(73) Patentinhaber: Continental Teves AG & Co. oHG, 60488 Frankfurt (DE)
(72) Erfinder: Rückert, Helmut, 64354 Reinheim (DE); Kircher, Andreas, 64297 Darmstadt (DE)

(56) Entgegenhaltungen:
- DE-A- 4 127 113
- FR-A- 2 539 475
- GB-A- 2 076 486
- US-A- 6 122 951
- US-B1- 6 367 594

## Beschreibung

Die Erfindung betrifft einen Bremsbelag für eine Teilbelagscheibenbremse mit einem Belagträger sowie einem darauf aufgebrachten Reibbelag gemäß Patentanspruch 1 und ein zugehöriges Verfahren zur Herstellung eines solchen Bremsbelages.

Aus der DE 41 27 113 A1 ist ein Bremsbelag für eine Teilbelagscheibenbremse bekannt, mit einem plattenförmigen Träger und einem damit fest verbundenen Reibbelag. Der Träger dient im wesentlichen der Übertragung der Bremskräfte und ist dazu an seinen Seitenbereichen jeweils durch eine Materialanhäufung verstärkt. Dabei ist der Träger aus einem Sinterwerkstoff hergestellt und ebenfalls durch Sintern mit dem Reibbelag verbunden. Die Herstellung des Trägers aus Sinterwerkstoffes bedingt eine begrenzte Belastbarkeit des Trägers insbesondere hinsichtlich auftretender Zugbelastungen. Des weiteren erstreckt sich die Materialanhäufung über den gesamten Seitenbereich des Trägers, was sich negativ auf das Gesamtgewicht des Bremsbelages auswirkt.

In der EP 0 442 048 B1 wird außerdem ein Bremsklotz mit einer Trägerplatte und einem Reibbelag beschrieben, dessen Seitenbereiche mit Anlageflächen jeweils durch eine Abkröpfung gegenüber dem Restteil der Trägerplatte bezogen auf die Reibfläche parallel nach hinten versetzt sind. Damit wird zunächst eine verbesserte Bremsklotzführung und -abstützung auch bei stark verschlissenem Reibbelag erreicht. Allerdings wird durch die Abkröpfung ein Seitenabschnitt der Trägerplatte mit ohnehin reduziertem Querschnitt zusätzlich vorbelastet. Dies geht insgesamt auf Kosten der Gesamtbelastbarkeit der Trägerplatte.

Ausgehend davon besteht die Aufgabe der Erfindung darin, einen Bremsbelag für eine Teilbelagscheibenbremse sowie ein Verfahren zu seiner Herstellung anzugeben, wobei der Bremsbelag eine verbesserte Bremsbelagführung und -abstützung bei jedem Betriebszustand aufweisen soll sowie eine höhere Bremskraftbelastung zu ertragen vermag.
Gelöst wird die Aufgabe durch einem Bremsbelag für eine Teilbelagscheibenbremse nach Patentanspruch 1. Danach umfaßt der Bremsbelag einen Belagträger, einen darauf aufgebrachten Reibbelag sowie Seitenbereiche des Belagträgers, an denen jeweils zumindest eine Abstützfläche zur Abstützung des Bremsbelages und eine Anlagefläche zur Übertragung von Bremskräften ausgebildet ist. Der Belagträger ist zur Vergrößerung der Abstütz- bzw. Anlagefläche jeweils in den Seitenbereichen zumindest abschnittsweise verdickt ausgeführt, indem durch einen Umformvorgang eine Erhebung an den Belagträger einstückig angeformt ist. Dabei ist ein übergang zwischen der Erhebung der Seitenbereiche und einem unverdickten Abschnitt der Seitenbereiche als Schräge ausgebildet. Damit wird nicht nur die Bremsbelagführung innerhalb der Teilbelagscheibenbremse sondern auch die Bremskraftübertragung infolge verringerter Flächenpressungen verbessert. Darüber hinaus wird der Belagträger durch die Erhebung verstärkt.

Weiterhin können die Seitenbereiche des Bremsbelags T- oder L-förmig ausgebildet sein, woran hakenförmige Ansätze vorgesehen sind, welche Anlageflächen für eine gezogene Bremskraftübertragung umfassen.

Eine vorteilhafte Ausführung ergibt sich dadurch, daß die Erhebung im Übergang zwischen Abstütz- und Anlagefläche auf der dem Reibbelag abgewandten Seite des Belagträgers angeordnet ist. Dies gestattet eine komfortable bzw. breitere Bremsbelagführung sowie -abstützung auch bei stark verschlissenem Reibbelag. Zugleich wird sowohl die Abstütz- als auch die Anlagefläche jeweils in ihren Abmessungen vergrößert. Aufgrund der vergrößerten Abmessungen wird der Bremsbelag auch bei stark verschlissenen Reibbelägen sicher abgestützt und kann nicht aus der Führung herausfallen. Insgesamt wird ferner der festigkeitskritische Querschnitt des Seitenbereiches im Übergang zwischen der Abstütz- und der Anlagefläche somit gezielt verstärkt.

Ferner wird um Schutz ersucht für ein Verfahren zur Herstellung eines derartigen Bremsbelages bzw. seines Belagträgers, nach dem die Erhebung durch Materialverdrängung innerhalb des Belagträgers während einer Verfahrenskombination von Feinschneiden bzw. Stanzen und Umformen einstückig angeformt wird, wobei durch das Feinschneiden bzw. Stanzen gleichzeitig die Kontur des Belagträgers mit Seitenbereichen erzeugt wird. Gemäß einer ersten Variante wird die Erhebung durch eine Vorstanzbearbeitung zur Materialverdrängung mit einem sich daran anschließenden Feinstanzschnitt erzeugt. Hierbei kann die Form der Erhebung beim Vorstanzen durch eine entsprechende Negativausnehmung in einem Gegenhalter vorgegeben werden.

In einer zweiten Alternative wird die Erhebung unmittelbar während des Feinsschneidens bzw. Stanzens durch eine integrierte Umformung zur Materialverdrängung erzeugt. Dies spart einen zusätzlich Bearbeitungsschritt ein.

Gemäß einer weiteren Alternative wird die Erhebung durch eine Umformbearbeitung mit einer sich anschließenden Feinschnitt- bzw. Stanzbearbeitung erzeugt. Dabei wird die gewünschte Form der Erhebung während der Umformbearbeitung festgelegt. Als besonders günstige Umformung hat sich eine Anstauchbearbeitung erwiesen. Die weitere Kontur des Belagträgers mit Ausnahme der Erhebung wird durch eine sich anschließende Feinschnitt- bzw. Stanzbearbeitung bestimmt.

Bei allen genannten Varianten der Herstellung wird der Belagträger besonders schnell und kostengünstig aus einem einfachen Blechzuschnitt gefertigt.

Zwei besonders vorteilhafte Ausführungsformen des Bremsbelages werden anhand der Figuren dargestellt und im folgenden näher erläutert.

Es zeigt:

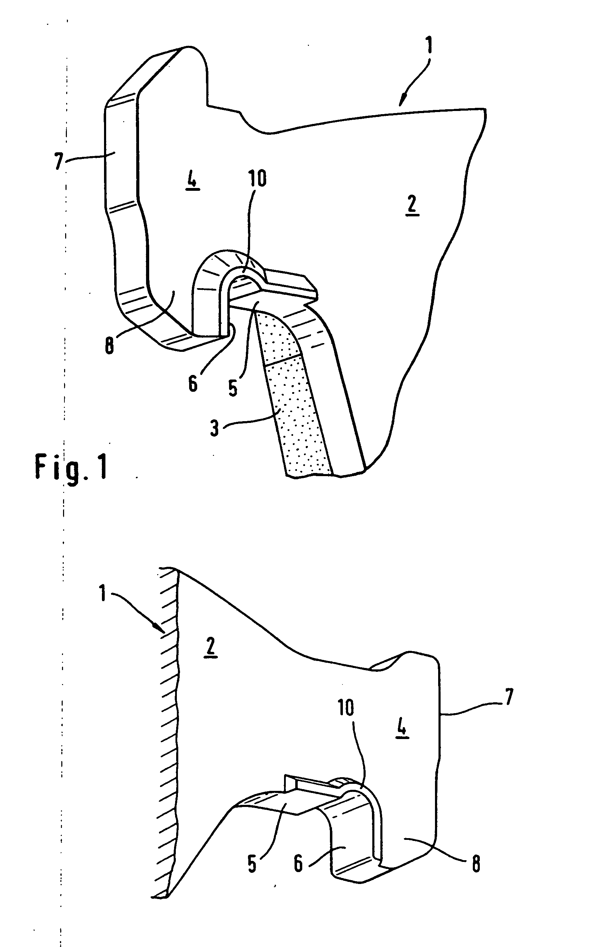

- Fig. 1.: zwei Teilansichten eines Bremsbelages mit Seitenbereich des Belagträgers, der eine Erhebung aufweist;
- Fig. 2.: eine Teilansicht eines Bremsbelages mit Seitenbereich des Belagträgers, der eine zweite Ausführung einer Erhebung aufweist.

Den Figuren ist jeweils eine Teilansicht eines Bremsbelages 1 mit einem Belagträger 2 sowie einem darauf aufgebrachten Reibbelag 3 zu entnehmen. Dabei ist der Reibbelag 3 fest bzw. unlösbar mit dem Belagträger 2 verbunden. Der Belagträger 2 dient der Abstützung des Bremsbelages 1 in einer nicht gezeigten Teilbelagscheibenbremse und gleichzeitig der Übertragung von Bremskräften. Der verschleißbare Reibbelag 3 ist zum Zusammenwirken mit einer ebenfalls nicht gezeigten Bremsscheibe der Teilbelagscheibenbremse vorgesehen. Allgemein ist der Bremsbelag bezogen auf eine Mittelebene spiegelsymmetrisch ausgebildet, so daß sich in Umfangsrichtung beidseitig angeordnete, symmetrische Seitenbereiche 4 zur Abstützung sowie Bremskraftübertragung ergeben. An jedem Seitenbereich 4 ist wiederum eine Abstützfläche 5 und zumindest eine Anlagefläche 6, 7 zur Übertragung der Bremskräfte ausgebildet. Die Abstützfläche 5 dient der radialen Auflage sowie in Betätigungsrichtung verschiebbaren Führung des Bremsbelages 1. Mittels der Anlageflächen 6, 7 werden die bei einer Bremsung auftretenden Bremskräfte, die im wesentlichen in der Umfangsrichtung wirken, auf die Teilbelagscheibenbremse bzw. einen fahrzeugfesten Halter übertragen. Dabei sind die Seitenbereiche 4 häufig T- bzw. L-förmig gestaltet und erstrecken sich mit Ansätzen 8 in entsprechende Nuten der Teilbelagscheibenbremse oder des Halters. Dies ermöglicht während einer Bremsung bei vorgegebener Bremsscheibendrehrichtung für den Bremsbelag 1 sowohl eine gedrückte als auch eine gezogene Bremskraftübertragung.

Zur Verstärkung sowie zur gleichzeitigen Vergrößerung der Abstütz- und Anlageflächen 5, 6 ist eine einstückig an den Belagträger 2 angeformte Erhebung 10 vorgesehen. Die Erhebung 10 erstreckt sich dabei vorzugsweise in dem Abschnitt des Seitenbereiches 4, in dem die Abstützfläche 5 in die Anlagefläche 6 übergeht. Hierbei handelt es sich um einen bei einer Bremsung stark belasteten Abschnitt, an dem nur eine begrenzter tragender Querschnitt des Belagträgers zur Verfügung steht. Durch die angeformte Erhebung 10 ergibt sich somit auch eine Stärkung dieses festigkeitskritischen Querschnitts. Gleichzeitig ist die Erhebung 10 auf der dem Reibbelag 3 abgewandten Seite des Belagträgers 3 angeformt. Dadurch wird die Qualität der Bremsbelagführung auch bei stark verschlissenem Reibbelag 3 verbessert, da eine stets ausreichend bemessene Abstützfläche zur Verfügung steht.

Die Erhebung wird durch eine Materialverdrängung einstückig an den Belagträger 2 angeformt. Dazu wird fertigungstechnisch günstig eine Verfahrenskombination von Umformen und Feinschneiden bzw. Stanzen angewandt. Dabei wird sowohl die Form der Erhebung 10 festgelegt als auch die Kontur des Belagträgers 2 bestimmt. Allgemein wird der Belagträger 2 aus einem Blechzuschnitt durch Stanzen oder Feinschneiden gewonnen. Die gewünschte Formgebung der Erhebung 10 wird durch entsprechende Gestaltung einer Negativausnehmung in einem Gegenhalter oder Auswerfer während des Feinschneidens, Umformens oder Vorstanzens festgelegt. Alternativ dazu kann die Erhebung 10 mit Abstützfläche 5 und Anlagefläche 6 während eines Umformvorganges, insbesondere einer Anstauchbearbeitung, ausgebildet werden. Die restliche Kontur des Belagträgers 2 mit Ausnahme der Abstützfläche 5 und der Anlagefläche 6 wird in einer sich anschließenden Feinschnitt- oder Stanzbearbeitung festgelegt. Die typischen Abmessungen der Erhebung 10 liegen bei etwa der 0,1- bis 1,5-fachen Dicke des sonstigen Belagträgers 2.

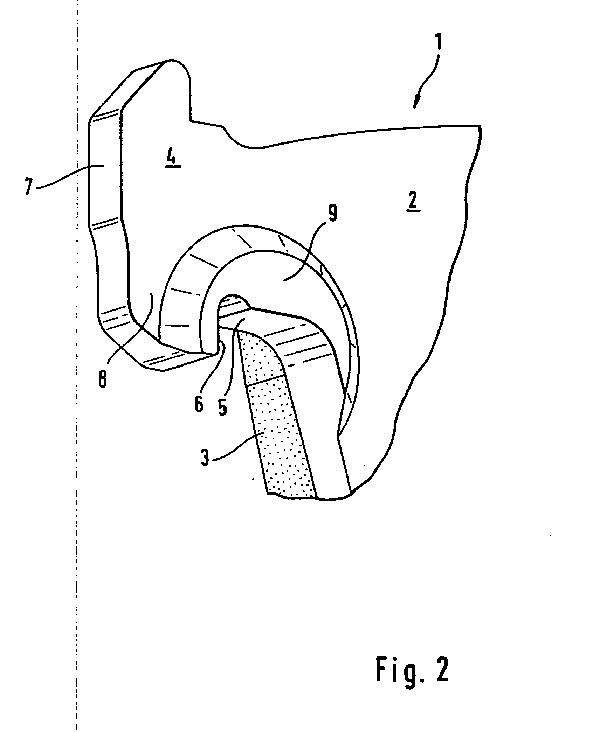

Figur 2 zeigt eine weitere Ausführung einer Erhebung 9 im Seitenbereich 4 des Belagträgers 2. Die Erhebung 9 ist massiver ausgebildet und erstreckt sich im wesentlichen kreisförmig um den Abschnitt der Abstütz- 5 und der Anlagefläche 6 herum. Demzufolge ergibt sich ein noch größerer Verstärkungseffekt im festigkeitskritischen Querschnitt.

Selbstverständlich ist die erfindungsgemäße Anordnung einer Erhebung 9, 10 am Belagträger 2 nicht auf die in den Figuren gezeigten Bremsbelagausführungen beschränkt. Eine entsprechende Erhebung läßt sich entsprechend auch bei anderen Bremsbelagausführungen anwenden.

## Patentansprüche

1. Bremsbelag (1) für eine Teilbelagscheibenbremse mit einem Belagträger (2) sowie einem darauf aufgebrachten Reibbelag (3), mit Seitenbereichen (4) des Belagträgers (2), an denen jeweils zumindest eine Abstützfläche (5) zur Abstützung des Bremsbelages (1) sowie eine Anlagefläche (6, 7) zur Übertragung von Bremskräften ausgebildet ist, wobei der Belagträger (2) in den Seitenbereichen (4) zumindest abschnittsweise verdickt ausgeführt ist, und wobei zur Vergrößerung der Abstütz- (5) bzw. Anlagefläche (6, 7) in wenigstens einem Seitenbereich (4) eine Erhebung (9, 10) an den Belagträger (2) durch einen Umformvorgang einstückig angeformt ist, **dadurch gekennzeichnet, daß** ein Übergang zwischen der Erhebung (9,10) der Seitenbereiche (4) und einem unverdickten Abschnitt der Seitenbereiche (4) als Schräge ausgebildet ist.

2. Bremsbelag (1) nach Anspruch 1, **dadurch gekennzeichnet, daß** die Seitenbereiche (4) T- oder L-förmig ausgebildet sind und daran hakenförmige Ansätze (8) vorgesehen sind, welche Anlageflächen (6) für eine gezogene Bremskraftübertragung umfassen.

3. Bremsbelag (1) nach Anspruch 1 oder 2, **dadurch gekennzeichnet, daß** die Erhebung (9, 10) im Übergang zwischen Abstütz- (5) und Anlagefläche (6, 7) auf der dem Reibbelag (3) abgewandten Seite des Belagträgers (2) angeordnet ist.

4. Verfahren zur Herstellung eines Bremsbelages (1) nach einem der vorhergehenden Ansprüche, **dadurch gekennzeichnet, daß** die Erhebung (9, 10) durch Materialverdrängung innerhalb des Belagträgers (2) während einer Verfahrenskombination von Feinschneiden bzw. Stanzen und Umformen einstückig angeformt wird, wobei durch das Feinschneiden bzw. Stanzen gleichzeitig die Kontur des Belagträgers (2) erzeugt wird.

5. Verfahren zur Herstellung eines Bremsbelages (1) nach Anspruch 3, **dadurch gekennzeichnet, daß** die Erhebung (9, 10) durch eine Vorstanzbearbeitung zur Materialverdrängung mit einem anschließenden Feinschnitt bzw. einer Stanzbearbeitung erzeugt wird.

6. Verfahren zur Herstellung eines Bremsbelages (1) nach Anspruch 3, **dadurch gekennzeichnet, daß** die Erhebung (9, 10) während des Feinschnittes bzw. Stanzens durch eine integrierte Umformung zur Materialverdrängung erzeugt wird.

7. Verfahren zur Herstellung eines Bremsbelages (1) nach Anspruch 3, **dadurch gekennzeichnet, daß** die Erhebung (9, 10) mit Abstützfläche (5) und Anlagefläche (6) durch eine Umformbearbeitung, insbesondere Anstauchbearbeitung, erzeugt wird, und daß die restliche Kontur des Belagträgers (2) durch eine sich anschließende Feinschnitt- bzw. Stanzbearbeitung festgelegt wird.

## Claims

1. Brake pad (1) for a spot-type disc brake with a pad carrier (2) and a friction lining (3) fitted thereto, with lateral areas (4) of the pad carrier (2), on which in each case at least one supporting surface (5) for supporting the brake pad (1) and one abutment surface (6, 7) for transmitting brake forces is provided, with the pad carrier (2) having a thickened design, at least in sections, in the lateral areas (4), and with an elevation (9, 10) being integrally formed at the pad carrier (2) in a forming process in order to increase the supporting surface (5) or abutment surface (6, 7) in at least one lateral area (4), **characterized in that** a transition between the elevation (9, 10) of the lateral areas (4) and a non-thickened portion of the lateral areas (4) is designed as a slope.

2. Brake pad (1) as claimed in claim 1,
**characterized in that** the lateral areas (4) have a T-type or L-type design, and hook-shaped attachments (8) are provided thereon, which comprise abutment surfaces (6) for a pull-type transmission of brake forces.

3. Brake pad (1) as claimed in claim 1 or 2,
**characterized in that** the elevation (9, 10) is arranged in the transition between supporting surface (5) and abutment surface (6, 7) on the side of the pad carrier (2) remote from the friction lining (3).

4. Method of manufacturing a brake pad (1) as claimed in any one of the preceding claims, **characterized**
**in that** the elevation (9, 10) is formed integrally by crowding within the pad carrier (2) during a combination of processes of precision blanking or punching and forming, and the contour of the pad carrier (2) is produced simultaneously in the precision blanking or punching process.

5. Method of manufacturing a brake pad (1) as claimed in claim 3, **characterized in that** the elevation (9, 10) is produced in a sub-punching operation for crowding and a subsequent precision blanking or punching process.

6. Method of manufacturing a brake pad (1) as claimed in claim 3, **characterized in that** the elevation (9, 10) is produced during the precision blanking or punching process by an integrated reforming for crowding.

7. Method of manufacturing a brake pad (1) as claimed in claim 3, **characterized in that** the elevation (9, 10) with supporting surface (5) and abutment surface (6) is produced by a forming process, in particular an upsetting process, and **in that** the further contour of the pad carrier (2) is defined in a subsequent precision blanking or punching process.

## Revendications

1. Garniture de frein (1) pour un frein à disque à garniture partielle avec un porte-garniture (2) ainsi qu'une garniture de friction (3) appliquée sur celui-ci, avec des zones latérales (4) du porte-garniture (2) dans chacune desquelles est réalisée au moins une surface de soutien (5) pour soutenir la garniture de frein (1) ainsi qu'une surface de contact (6, 7) pour la transmission des forces de freinage, le porte-garniture (2) étant réalisé surépaissi au moins par endroits dans les zones latérales (4), et pour augmenter la surface de soutien (5) et la surface de contact (6, 7) dans au moins une zone latérale (4), un relief (9, 10) étant formé d'un seul tenant sur le porte-garniture (2), par un processus de déformation, **caractérisée en ce qu'**une transition est réalisée sous la forme d'un biseau entre le relief (9, 10) des zones latérales (4) et un segment non surépaissi des zones latérales (4).

2. Garniture de frein (1) selon la revendication 1, **caractérisée en ce que** les zones latérales (4) sont en forme de T ou de L et sur celles-ci sont prévus des appendices (8) en forme de crochet qui entourent des surfaces de contact (6) pour la transmission par traction des forces de freinage.

3. Garniture de frein (1) selon la revendication 1 ou 2, **caractérisée en ce que** le relief (9, 10) dans la transition entre la surface de soutien (5) et la surface de contact (6, 7), est disposé sur la face du porte-garniture (2) tournée à l'opposé de la garniture de friction (3).

4. Procédé de fabrication d'une garniture de frein (1) selon l'une des revendications précédentes, **caractérisé en ce que** le relief (9, 10) est formé d'un seul tenant par refoulement de matière à l'intérieur du porte-garniture (2) pendant une combinaison de procédés de découpage de précision ou d'estampage et de déformation, le découpage de précision ou l'estampage produisant en même temps le contour du porte-garniture (2).

5. Procédé de fabrication d'une garniture de frein (1) selon la revendication 3, **caractérisé en ce que** le relief (9, 10) est produit par un usinage par pré-estampage pour le refoulement de matière avec une coupe de précision ou un usinage consécutif par estampage.

6. Procédé de fabrication d'une garniture de frein (1) selon la revendication 3, **caractérisé en ce que** le relief (9, 10) est produit pendant le découpage de précision ou l'estampage par une déformation intégrée en vue du refoulement de matière.

7. Procédé de fabrication d'une garniture de frein (1) selon la revendication 3, **caractérisé en ce que** le relief (9, 10) avec la surface de soutien (5) et la surface de contact (6) est produit par un usinage par déformation, en particulier un usinage par refoulement, et **en ce que** le contour restant du porte-garniture (2) est défini par une opération consécutive de découpage de précision ou d'estampage.
